# EUROPEAN PATENT APPLICATION

(11) **EP 3 706 048 A1**
(43) Date of publication of application: **09.09.2020**
(21) Application number: 19161329.8
(22) Date of filing: 07.03.2019
(51) Int. Cl.: G06N 7/00

(54) **ANOMALY PREDICTION IN AN INDUSTRIAL SYSTEM**

(71) Applicant: Siemens Aktiengesellschaft, 80333 München (DE)
(72) Inventor: Geipel, Markus Michael, 80799 München (DE); Günnemann-Gholizadeh, Nikou, 80336 München (DE); Merk, Stephan, 80804 München (DE); Mittelstädt, Sebastian, 81541 München-Haidhausen (DE)

(57) **Abstract**

The invention specifies an automated method of predicting a future system behaviour of an industrial system (1), comprising the following steps:
- capturing (S1) data of a current system behaviour with at least one sensor (2) within a slot (S) of a predefined time length,
- analysing (S2) the data in the slot (S) and assigning the slot (S) to a cluster (Ci),
- retrieving (S3) prediction data (PD) about the future system behaviour corresponding to the assigned cluster (Ci) using a database (DB), and
- triggering (S4) an output based on the prediction data (PD) .

The invention further claims a system, a computer program product, and a computer-readable storage medium.

## Description

### Field of the Invention

The present invention relates to an automated method of predicting a future system behaviour of an industrial system. The invention further claims a system, a computer program product, and a computer-readable storage medium.

### Background of the Invention

Detection of abnormal operation in an Electric Submersible Pump (ESP) normally requires examination by a domain expert. The expert will review the time series of sensor data (motor current, different pressures etc.) to make a judgement. This method does not scale considering the large number of ESPs in the field. A similar problem is encountered in other industries where a large fleet of assets is deployed. The challenge is even bigger for the prediction of abnormal operation or failures. In this case, domain experts often have no solution or need a large amount of experience.

ESP service engineers and operators of gearless mill drives requested a solution that fulfils the following requirements:
1. Automatic analysis on sensor data
2. Prediction of anomalies
3. Explaining the prediction
4. Online correction of classifications
5. Deployment of model with low manual efforts (labelling, parameter tuning)

The problem is currently solved by either formulating explicit rules or by applying machine learning.

Formulating rules depends on the domain expert's ability to explicitly formulate his or her knowledge. Apart from that rule systems in some domains can become very complicated and hard to maintain. In other cases, such as the oil pump domain, the different assets differ in nonobvious ways such that one set of rules does not trivially translate to other assets (violates requirement 5). For the prediction scenario domain experts have no rules (violates requirement 2).

Machine learning can provide models that automatically analyse data, detect anomalies, and predict failures. However, the training of machine learning models requires labelled sensor data ideally for each asset/pump (examples of regular operation and anomalous patterns), which is rarely available. Further, in field tests experts expected the system to give explanations for the predictions and accept corrections directly, without lengthy retraining of the respective models.

The machine learning approach on the other hand takes a black-box approach which cannot explain its decisions in an intuitive way (violates requirement 3) and is relatively independent of explicit domain knowledge. Based on labelled data where the expert has marked periods of regular and abnormal operation, the machine learning model classifies new data.

The drawback of this approach is that a significant amount of labelled training data is needed. This does not only imply manual effort by the expert but also excludes new assets from the anomaly detection for which not enough data has been collected, or assets which have not experienced abnormal behaviour so far (violates requirement 5). Model also rarely generalize which inhibits transfer of models from one asset to another, or the reuse of training data for new assets.

Rules and machine learning models must be manually corrected or require intensive retraining of models which includes the monitoring of model performance, selection of new training data sets, retraining, evaluation and deployment (violates requirement 4).

### Summary of the Invention

An objective of the present invention is to provide an approach that satisfies the above-mentioned requirements ESP service engineers and operators of gearless mill drives requested.

It is a further object of the invention to provide an alternative to the state of the art.

The invention is given by the features of the independent claims. Advantageous embodiments are provided in the dependent claims. Further features, application possibilities, and advantages of the invention result from the following description.

According to the invention the objective is accomplished by measuring a multivariate time series in an industrial system, analysing it, and using clustered and labelled data of the past system behaviour to predict the future system behaviour.

The invention claims an automated method of predicting a future system behaviour of an industrial system. The method comprises the following steps:
- capturing data of a current system behaviour with at least one sensor within a slot of a predefined time length,
- analysing the data in the slot and assigning the slot to a cluster,
- retrieving prediction data about the future system behaviour corresponding to the assigned cluster using a database, and
- triggering an output based on the prediction data.

Examples for system behaviour are "abnormal operation", "normal behaviour", "faulty behaviour" or "unknown behaviour".

According to a further embodiment the database is determined by the following steps:
- capturing a multivariate time series of a system behaviour with at least one sensor,
- splitting the multivariate time series into slots of the predefined time length,
- clustering the slots in an unsupervised way into clusters, while each cluster contains slots during which the system exhibited the same system behaviour,
- assigning labels to the clusters, whereas the labels define a relative measure for the system behaviour,
- determining probabilities for transition from one cluster to another cluster by analysing the occurring transition frequencies between the slots and including all possible transitions between the slots even if not occurred, and
- feeding the database with the clusters, the corresponding labels and the corresponding probabilities for transition.

The determined probabilities for transition include the probabilities for transition from one cluster to another cluster and the probability for no transition into another cluster, e.g. the probability for staying in the current cluster.

Including all possible transitions between the slots even if they did not occur in the captured multivariate time series has the advantage that very low probability of rare, yet unobserved events are considered.

Summing up the previous steps, the invention is based on the combination of two algorithms: Firstly, the unsupervised clustering of slots of a multivariate timeseries. And, secondly, the calculation of empirical cluster transition probabilities (probabilities for transition from one cluster to another cluster). Adding/ assigning the labels to the clusters/ this transition model enables the prediction of possible anomalies and the generation of warnings.

According to a further embodiment the assigned labels can be absolute classes, values on a continuous scale, or a categorical distribution. Examples for absolute classes are "abnormal operation", "normal behaviour", "faulty behaviour" or "unknown behaviour". An example for values/ the evaluation on a continuous scale is a 0% - 100% rating based on the regular operation.

According to a further embodiment the database is represented in a graph structure, which can be a transition graph, an adjacency list, or a transition matrix.

According to a further embodiment the labels are based on past classifications of the clusters by a domain expert or any other classification technique.

According to a further embodiment the triggered output is a prediction message to the user of the system.

According to a further embodiment the triggered output is a warning signal.

According to a further embodiment the system is an electric submersible pump. Examples for measured parameters are the motor current or different pressures in the system.

The present invention further claims a system comprising at least one sensor for measuring a multivariate time series with at least one sensor and a computational device for executing a method according to one of the previous claims.

The present invention further claims a computer program product comprising instructions which, when the program is executed by the computational device, cause the computational device to carry out the steps of the method according to the invention.

The present invention further claims a computer-readable storage medium comprising instructions which, when executed by the computational device, cause the computational device to carry out the steps of the method according to the invention.

The invention has several advantages. Firstly, the method provides an automatic analysis of sensor data (satisfies requirement 1) and the system requires minimal input from the user (only the classification/ labelling of a few clusters which have been found in an automatic unsupervised way (satisfies requirement 5)). The usage of unsupervised clustering/ classification reduces the effort on the user side. The calculation of probabilities and predictions/
warnings based on cluster transitions results in the explainability and interpretability of the prediction/warning.

Secondly, the system provides an explainable prediction or warning signal. The signal furthermore is represented by an interpretable and inherently meaningful quantity: probability of anomaly in the next time slot/ time interval (satisfies requirement 2 and requirement 3).

Thirdly, the expert can correct the Clustering/classification of one segment and the system can automatically adapt the prediction by changing the classification of the cluster (satisfies requirement 4).

The method and the system can be applied to wide range of anomaly detection and prediction cases with some adaption effort on the producer side, and minimal classification effort on the user side.

Further benefits and advantages of the present invention will become apparent after a careful reading of the detailed description with appropriate reference to the accompanying drawings.

### Brief Description of the Drawings

- Fig. 1: shows a flow diagram,
- Fig. 2: shows a process of determining a database DB,
- Fig. 3: shows multivariate time series MTS,
- Fig. 4: shows a transition graph TG,
- Fig. 5: shows a labelled transition graph LTG, and
- Fig. 6: shows a system 1.

### Detailed Description of the Invention

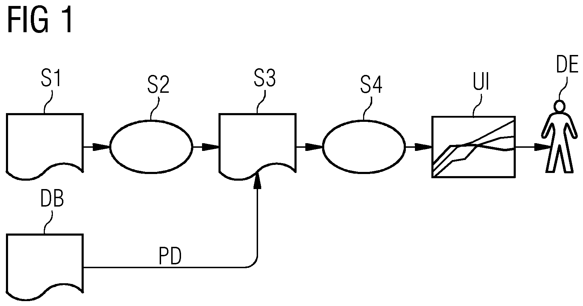

Fig. 1 a flow diagram of an automated method of predicting a future system behaviour of an industrial system. The method comprises the following steps:
- capturing S1 data of a current system behaviour with at least one sensor within a slot of a predefined time length,
- analysing S2 the data in the slot and assigning the slot to a cluster,
- retrieving S3 prediction data PD about the future system behaviour corresponding to the assigned cluster using a database DB, and
- triggering (S4) an output based on the prediction data (PD) for example on a user interface UI and presenting explainable predictions to a domain expert DE.

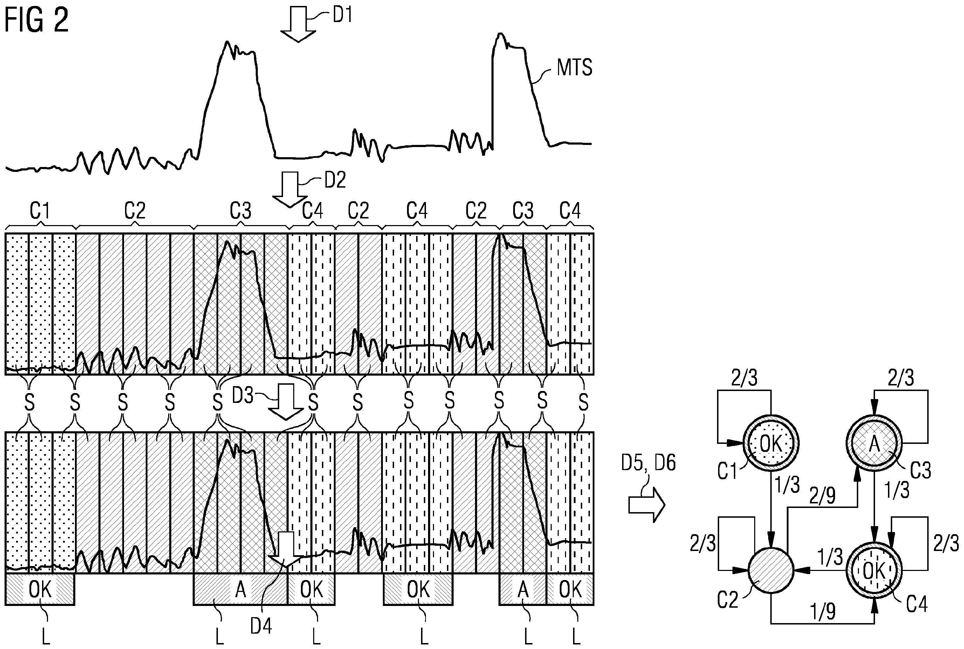

Fig. 2 shows a process of determining a database DB as used for retrieving S3 prediction data PD as described in Fig. 1. The database DB is determined by the following steps:
- capturing D1 a multivariate time series MTS of a system behaviour with at least one sensor,
- splitting D2 the multivariate time series MTS into slots S of the predefined time length,
- clustering D3 the slots S in an unsupervised way into clusters Ci (first cluster C1, second cluster C2, third cluster C3, and forth cluster C4) while a cluster Ci (first cluster C1, second cluster C2, third cluster C3 or forth cluster C4) contains slots S during which the system exhibited the same system behaviour,
- assigning D4 labels L to the clusters Ci (first cluster C1, second cluster C2, third cluster C3, and forth cluster C4), whereas the labels L define a relative measure for the system behaviour,
- determining D5 probabilities for transition from one cluster Ci (first cluster C1, second cluster C2, third cluster C3 or forth cluster C4) to another cluster Ci (first cluster C1, second cluster C2, third cluster C3 or forth cluster C4) by analysing the occurring transition frequencies between the slots S, and
- feeding D6 the database DB with the clusters Ci (first cluster C1, second cluster C2, third cluster C3, and forth cluster C4), the corresponding labels L and the corresponding probabilities for transition. The database DB information can be for example visualised in a labelled transition graph LTG. In Fig. 2 the clusters Ci (first cluster C1, second cluster C2, third cluster C3, and forth cluster C4) are visualized as graph nodes and the probabilities for transition are visualised as graph edges with the corresponding probability values. Examples for labels L are "OK" and "anomaly A". Note that the Fig. 2 does not show transitions/ edges between all clusters Ci (there is for example no transition between the first Cluster C1 and the forth cluster C4)/ nodes as they did not occur in the experiment but are still not impossible. These missing edges may be substituted with very low probability edges to account for rare unobserved events.

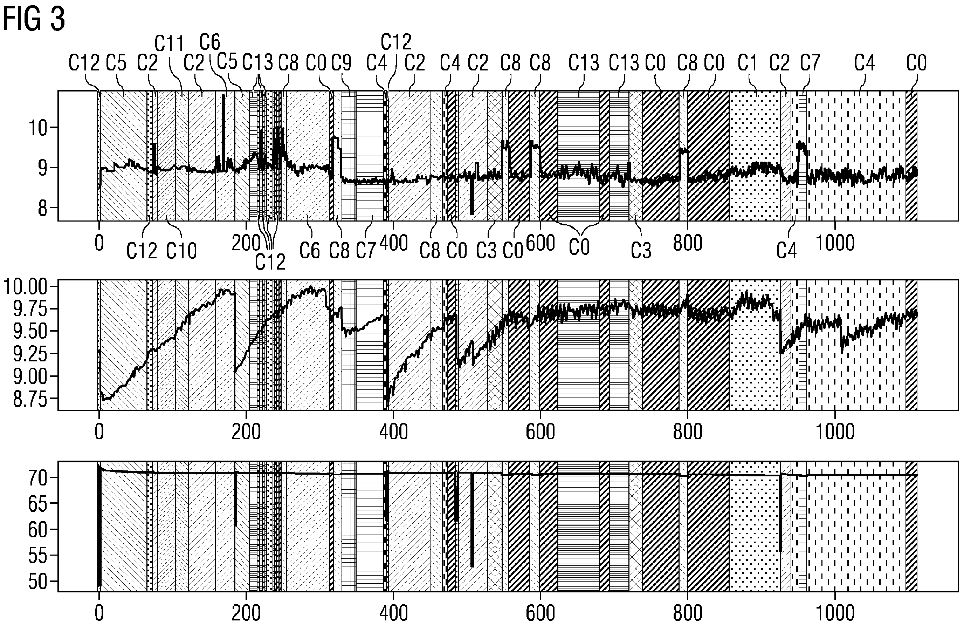

Fig. 3 to Fig. 5 show an alternative example to Fig. 2.

Fig. 3 shows multivariate time series MTS of a system behaviour which were captured D1 with three different sensors.

Than the multivariate time series MTS were split D2 into slots S. Than the slots S were clustered D3 in an unsupervised way into clusters Ci (first cluster C1 to thirteenth cluster C13) while a cluster Ci (first cluster C1 to thirteenth cluster C13). Each cluster Ci (first cluster C1 to thirteenth cluster C13) contains slots S during which the system exhibited the same system behaviour. While in general all slots S have the same predefined time length, Fig. 3 shows slots S of different length as subsequent slots S of one cluster Ci (first cluster C1 to thirteenth cluster C13) were merged.

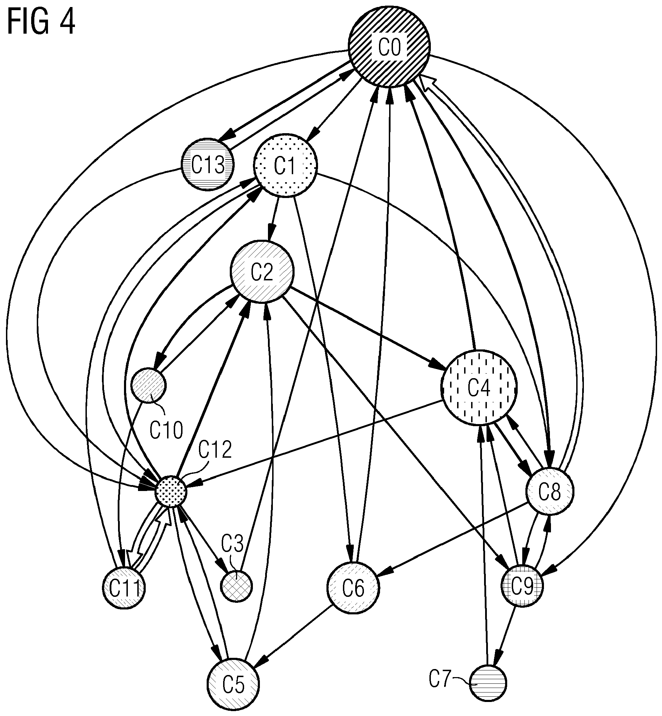

Than the probabilities for transition from one cluster Ci (first cluster C1 to thirteenth cluster C13) to another cluster Ci (first cluster C1 to thirteenth cluster C13) were determined D5 by analysing the occurring transition frequencies between the slots S. Fig. 4 shows a transition graph TG.

The transition graph TG was calculated between the clusters Ci (first cluster C1 to thirteenth cluster C13) based on the transitions found in the past sensor data. Circles represent clusters Ci (first cluster C1 to thirteenth cluster C13). In this example the circle size is proportional to the time the system spent in the respective cluster Ci. The time the system spent in the respective cluster Ci is synonymous to a transition from one cluster Ci to itself. The arrows represent transitions between clusters Ci. Their strength represents the frequency with which the transition occurs. Please note that in an implementation this information does not need to be explicitly represented by a graph structure but may also be held in an adjacency list or transition matrix or similar data structure.

Note that the Fig. 4 does not show transitions/ edges between all clusters Ci (there is for example no transition between the first Cluster C1 and the forth cluster C4)/ nodes as they did not occur in the experiment but are still not impossible.

These missing edges may be substituted with very low probability edges to account for rare unobserved events.

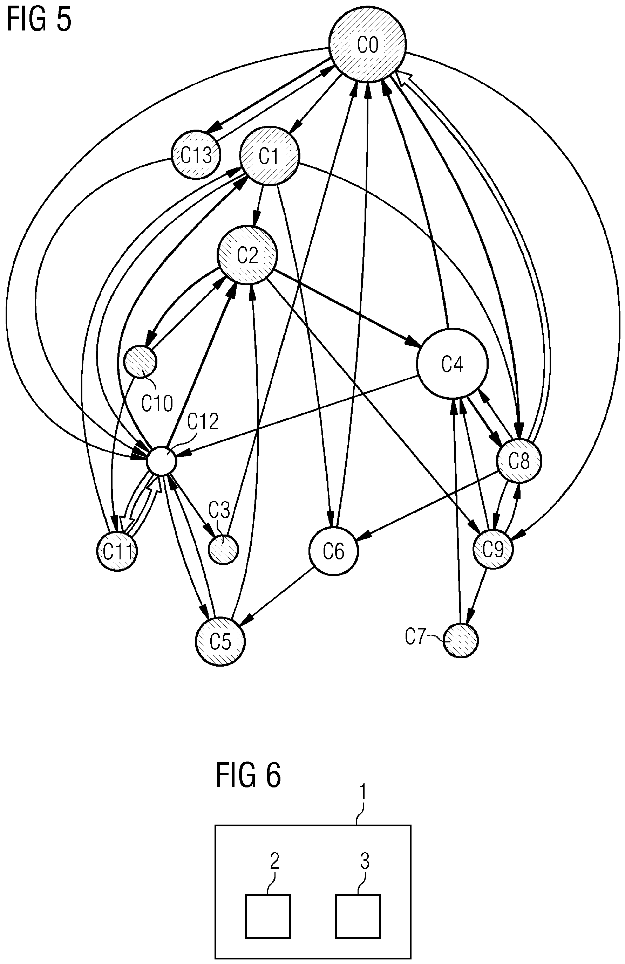

After the transition graph TG has been calculated, labels L are assigned D4 to the clusters Ci (first cluster C1 to thirteenth cluster C13). Fig. 5 shows a labelled transition graph LTG. Past classifications of slots S by a domain expert DE or any other classification technique are used to assign labels L to the clusters Ci. The labels L define a relative measure for the system behaviour. Examples for labels L are "normal behaviour" (C0, C1, and C13), "faulty behaviour" (C4, C6, and C12), "unknown behaviour" (C2, C3, C5, C7, C8, C9, C10, C11). Please note, that classifications may not be absolute, but may also be represented on a continuous scale (0% - 100% regular operation), or a categorical distribution to account for ambiguity.

Clusters Ci with high transition frequency (thicker arrows) to classified clusters Ci serve as predictors and their occurrence in operation triggers a prediction message to a domain expert DE or subsequent system 1 acting upon them. For instance, in Fig. 5, the second cluster C2 is frequently followed by the forth cluster C4 which is classified abnormal/ "faulty behaviour". Thus, if the system enterers the second cluster C2, a warning would be triggered.

Fig. 6 shows a system 1 with at least one sensor 2 for measuring a multivariate time series MTS (not shown in this figure) with at least one sensor and a computational device 3 for executing a method described in Fig. 1 and Fig. 2.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Automated method of predicting a future system behaviour of an industrial system (1), comprising the following steps:
- capturing (S1) data of a current system behaviour with at least one sensor (2) within a slot (S) of a predefined time length,
- analysing (S2) the data in the slot (S) and assigning the slot (S) to a cluster (Ci),
- retrieving (S3) prediction data (PD) about the future system behaviour corresponding to the assigned cluster (Ci) using a database (DB), and
- triggering (S4) an output based on the prediction data (PD) .

2. Method according to claim 1, wherein the database (DB) is determined by the following steps:
- capturing (D1) a multivariate time series (MTS) of a system behaviour with at least one sensor (2),
- splitting (D2) the multivariate time series (MTS) into slots (S) of the predefined time length,
- clustering (D3) the slots (S) in an unsupervised way into clusters (Ci), while each cluster (Ci) contains slots (S) during which the system (1) exhibited the same system behaviour,
- assigning (D4) labels (L) to the clusters (Ci), whereas the labels (L) define a relative measure for the system behaviour,
- determining (D5) probabilities for transition from one cluster (Ci) to another cluster (Ci) by analysing the occurring transition frequencies between the slots (S) and including all possible transitions between the slots (S) even if not occurred, and
- feeding (D6) the database (DB) with the clusters (Ci), the corresponding labels (L) and the corresponding probabilities for transition.

3. Method according to one of the previous claims, wherein the assigned labels (L) can be absolute classes, values on a continuous scale, or a categorical distribution.

4. Method according to one of the previous claims, wherein the database (DB) is represented in a graph structure, which can be a transition graph, an adjacency list, or a transition matrix.

5. Method according to one of the previous claims, wherein the labels (L) are based on past classifications of the clusters (Ci) by a domain expert (DE) or any other classification technique.

6. Method according to one of the previous claims, wherein the triggered output is a prediction message to the user of the system (1).

7. Method according to one of the previous claims, wherein the triggered output is a warning signal.

8. Method according to one of the previous claims, wherein the system (1) is an electric submersible pump.

9. System comprising:
- at least one sensor (2) for measuring a multivariate time series (MTS) and
- a computational device (3) for executing a method according to one of the previous claims.

10. A computer program product comprising instructions which, when the program is executed by the computational device (3), cause the computational device (3) to carry out the steps of the method according to one of the claims 1 to 8.

11. A computer-readable storage medium comprising instructions which, when executed by the computational device (3), cause the computational device (3) to carry out the steps of the method of claim according to one of the claims 1 to 8.
